(19) Europäisches Patentamt / European Patent Office / Office européen des brevets

(11) **EP 4 176 956 B1**

(12) **EUROPEAN PATENT SPECIFICATION**

(45) Date of publication and mention
of the grant of the patent:
**02.07.2025 Bulletin 2025/27**

(21) Application number: **20942651.9**

(22) Date of filing: **03.07.2020**

(51) International Patent Classification (IPC):
**B01D 39/20** (2006.01)    **D21H 13/40** (2006.01)
**D04H 1/4218** (2012.01)

(52) Cooperative Patent Classification (CPC):
**D04H 1/4218; B01D 39/2024; D04H 1/587;**
**D04H 1/64; D04H 1/732; D21H 17/44; D21H 27/08;**
B01D 2239/0428; B01D 2239/064; B01D 2239/086;
B01D 2239/10; B01D 2239/1233; Y02A 50/2351

(86) International application number:
**PCT/JP2020/026245**

(87) International publication number:
**WO 2022/003965 (06.01.2022 Gazette 2022/01)**

(54) **FILTER MEDIUM FOR AIR FILTERS AND METHOD FOR PRODUCING SAME**

FILTERMEDIUM FÜR LUFTFILTER UND VERFAHREN ZU DESSEN HERSTELLUNG

MILIEU FILTRANT POUR FILTRES À AIR ET PROCÉDÉ POUR SA PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.05.2023 Bulletin 2023/19**

(73) Proprietor: **Hokuetsu Corporation
Nagaoka-shi
Niigata 940-0027 (JP)**

(72) Inventors:
• **TASHIRO, Nozomi
Nagaoka-shi, Niigata 940-0027 (JP)**

• **SATO, Masashi
Nagaoka-shi, Niigata 940-0027 (JP)**

(74) Representative: **v. Bezold & Partner
Patentanwälte - PartG mbB
Ridlerstraße 57
80339 München (DE)**

(56) References cited:
WO-A1-2014/171165        WO-A1-2014/171165
JP-A- 2010 094 580       JP-A- 2010 094 580
JP-A- 2014 221 456       JP-A- 2014 221 456
JP-A- 2016 097 336       US-A1- 2011 147 320

**Description**

Technical Field

The present disclosure relates to a filter medium for air filters to be used in an air filter installed in a clean room for semiconductor, liquid crystal, or food industry, building air conditioning, an air cleaner, or the like.

Background Art

In order to collect and remove submicron or micron particles in the air, air filters including a filter medium for air filters are generally used. Air filters are divided into coarse dust filters, medium performance filters, HEPA filters, and ULPA filters by the size of particles to be collected and by the collection efficiency, and the latter filters have higher performance.
Characteristics indicating the filtration performance of a filter medium for air filters include the pressure loss and the collection efficiency. As the pressure loss increases, the energy consumption required for ventilation increases and the running cost of the filter increases, and therefore a filter medium having a low pressure loss and high particle collection efficiency is desirable. The PF value defined by Mathematical Formula 1 is one of the indexes of filtration performance shown from this viewpoint. Permeability [%] = 100 - collection efficiency [%], and a filter medium having a high PF value is desirable.

[Mathematical Formula 1]

$$\text{PF value} = \frac{\log_{10}(\text{Permeability[\%]}/100)}{\text{Pressure loss[\%]}/9.81} \times (-100)$$

Other physical properties required for a filter medium for air filters include water repellency. If a filter medium for air filters has low water repellency, there is a problem that sealant, used for processing the filter medium into an air filter unit, permeates into the filter medium. A filter medium for air filters having sufficient water repellency can prevent occurrence of a problem that pores of the filter medium are blocked by water droplets due to dew condensation caused by a change in air temperature or by water droplets due to flow of air with high humidity.
In addition, physical properties required for a filter medium for air filters include stiffness and strength. If a filter medium for air filters has low stiffness, the filter medium is bent during ventilation, which may cause contact between the pleat peaks to increase the pressure loss. If a filter medium for air filters has low strength, pleating the filter medium into an air filter unit or using the filter medium for ventilation may crack or tear the filter medium. Therefore, it is necessary to impart stiffness and strength that are practically sufficient to the filter medium. However, a glass fiber used in a filter medium has no self-adhesiveness and has stiffness and strength that are insufficient, and therefore a binder such as a binder resin or a binder fiber is generally used. Above all, a binder resin capable of imparting both stiffness and strength is desirably used, but the binder resin adhered to a filter medium may decrease the PF value because the film of the binder clogs pores of the filter medium to increase the pressure loss, or covers the network structure of glass fibers having a large surface area to inhibit particle collection.
As a method of improving the PF value of a filter medium for air filters, a method in which a filter medium for air filters is provided with a cationic surfactant that is a quaternary ammonium salt (for example, see Patent Literature 1), a method in which a filter medium for air filters is provided with a fluorine-based water repellent in addition to a surfactant including a binder resin and either or both of a sulfate ester salt and a sulfonate salt (for example, see Patent Literature 2), and a method in which a filter medium for air filters is provided with a fluorine-based surfactant containing a binder resin and a perfluoroalkyl compound and with a water repellent (for example, see Patent Literature 3) have been proposed.
As a method of further improving the PF value, a method has been proposed in which a filter medium for air filters is provided with a fully fusible binder fiber and a core-sheath binder fiber (for example, see Patent Literature 4).

Citation List

Patent Literature

Patent Literature 1: JP 2010-94580 A
Patent Literature 2: JP 2014-221456 A
Patent Literature 3: JP 2017-42762 A

Patent Literature 4: JP 2018-38983 A

Summary of Invention

Technical Problem

As described above, the techniques in Patent Literature 1 to 3 have been proposed as a method of improving the PF value of a filter medium for air filters, but further improvement in the PF value and water repellency is required.

The method disclosed in Patent Literature 4 has a problem that the stiffness is insufficient although sufficient strength is obtained.

As described above, a filter medium for air filters is required to have a high PF value in addition to stiffness, strength, and water repellency that are practically sufficient, but these characteristics, particularly stiffness, a PF value, and water repellency that are sufficient cannot be obtained using a conventional technique. Therefore, an object of the present disclosure is to provide a filter medium for air filters that has a high PF value and high water repellency in addition to stiffness and strength that are practically sufficient, and to provide the filter medium with an easy production method.

Solution to Problem

The filter medium for air filters according to the present invention is a filter medium, composed of a wet-laid nonwoven fabric including a glass fiber, including a cationic binder resin, a fluororesin, and a cationic surfactant, and the solid content mass ratio of the fluororesin to the cationic surfactant is within a range of 30/70 to 80/20. In binding the glass fiber with the cationic binder resin, using the fluororesin and the cationic surfactant adsorbed to the glass fiber at the above-described ratio, a filter medium for air filters is obtained that has a high PF value and high water repellency in addition to stiffness and strength that are practically sufficient.

In the filter medium for air filters according to the present invention, the fluororesin is preferably a nonionic or cationic fluororesin. The glass fiber has a negative surface charge, and therefore the fluororesin is further easily adsorbed to the glass surface, and the water repellent effect is improved.

The filter medium for air filters according to the present invention preferably has solid mass contents, of the cationic binder resin, the fluororesin and the cationic surfactant, summed up to 2 to 12% based on the whole filter medium. The filter medium can achieve stiffness and strength that are sufficient, and simultaneously, can achieve a high PF value.

In the filter medium for air filters according to the present invention, the wet-laid nonwoven fabric preferably includes, as the glass fiber, a glass wool fiber having a fiber diameter of 1 to 10 $\mu$m, a glass wool fiber having a fiber diameter of less than 1 $\mu$m, and a chopped glass fiber having a fiber diameter of 4 to 30 $\mu$m. A high PF value and high strength are easily obtained.

The filter medium for air filters according to the present invention may further include a binder fiber, wherein the blending ratio of the binder fiber is up to 30% based on the total fiber mass of the fibers in the filter medium. The stiffness and the strength of the filter medium can be further enhanced without significantly decreasing the PF value.

The method for producing a filter medium for air filters according to the present invention includes the steps of forming a slurry including a glass fiber into a sheet in a wet state using a wet papermaking method, impregnating the sheet in the wet state with an aqueous dispersion, including a cationic binder resin, a fluororesin, and a cationic surfactant, in which a solid content mass ratio of the fluororesin to the cationic surfactant is within a range of 30/70 to 80/20, and drying the sheet in the wet state impregnated with the aqueous dispersion to obtain a dry sheet. As a result, a filter medium for air filters is obtained that has a high PF value and high water repellency in addition to stiffness and strength that are practically sufficient.

Advantageous Effects of Invention

According to the present disclosure, it is possible to provide a filter medium for air filters that has a high PF value and high water repellency in addition to stiffness and strength that are practically sufficient.

Brief Description of Drawings

Fig. 1 is a graph showing a relation between a solid content mass ratio of fluororesin/surfactant and a PF value of 0.10 to 0.15 $\mu$m.
Fig. 2 is a graph showing a relation between a solid content mass ratio of fluororesin/surfactant and water repellency.

Description of Embodiments

Next, the present invention will be described in detail with reference to embodiments, but the present invention is not to be construed as being limited to these descriptions. The embodiments may be variously modified as long as an effect of the present invention is exhibited.

The filter medium for air filters according to the present embodiment is a filter medium, composed of a wet-laid nonwoven fabric including a glass fiber, for air filters, and the filter includes a cationic binder resin, a fluororesin, and a cationic surfactant, and the solid content mass ratio of the fluororesin to the cationic surfactant is within a range of 30/70 to 80/20. In the process of producing the filter medium, a sheet in a wet state, into which a slurry including a glass fiber is formed using a wet papermaking method, is impregnated with an aqueous dispersion, including a cationic binder resin, a fluororesin, and a cationic surfactant, in which the solid content mass ratio of the fluororesin to the cationic surfactant is within a range of 30/70 to 80/20. As a result of the impregnation, both the fluororesin and the surfactant are adsorbed to the glass fiber. Next, the impregnated sheet is dried. In the filter medium subjected to such a process, the glass fibers are uniformly dispersed to prevent aggregation of the glass fibers, and the surface area of the filter medium is increased. In addition, the surface tension of the impregnating solution is lowered by the surfactant, and therefore the problem that the surface and pores of the filter medium are blocked by the binder resin is suppressed, so that the filter medium is obtained that has a higher PF value than a filter medium obtained by impregnating the sheet with only the binder resin.

The solid content mass ratio of the fluororesin to the cationic surfactant (fluororesin/surfactant) in the filter medium in the present embodiment is 30/70 to 80/20, and more preferably 40/60 to 80/20. By setting this mass ratio, a filter medium for air filters can be obtained that has both a high PF value (for example, of 11 or more) and a high water repellency (for example, of 508 mm of water or more). If the mass ratio of the fluororesin is lower than 30 and the mass ratio of the surfactant is higher than 70, the fluororesin is not sufficiently adsorbed to the glass fiber, so that the PF value and the water repellency are low, and if the mass ratio of the fluororesin is higher than 80 and the mass ratio of the surfactant is lower than 20, the surfactant is not sufficiently adsorbed to the glass fiber, so that the PF value is low.

The fluororesin used in the present embodiment is a resin containing a fluoroalkyl group in the molecule, and has characteristics such as water repellency, oil repellency, and non-adhesiveness by the repulsive force due to the fluorine atom. In regard to employing the fluororesin, the fluororesin preferably consists of a perfluoroalkyl group-containing resin in an aqueous emulsion or an aqueous dispersion, which is commercially available as a water repellent, an oil repellent, or an antifouling agent. The fluororesin is preferably nonionic or cationic, and is more preferably a cationic fluororesin, which is easily adsorbed to the glass fiber. The glass fiber has a negative surface charge, and therefore the fluororesin is further easily adsorbed to the glass surface, and the water repellent effect is improved. The term "cationic" used herein means that the fluororesin itself or the emulsifier or the like is cationic, and that the colloidal particles of the fluororesin dispersed in water have a positive surface charge. Using a cationic fluororesin, the fluororesin is easily adsorbed to the glass fiber, which has a negative surface charge in water.

The surfactant used in the present embodiment is selected from cationic surfactants. Examples of the cationic surfactant include primary to tertiary amine salts and quaternary ammonium salts. In the present embodiment, the filter medium may further include a nonionic surfactant within a range in which an effect of the present invention is not impaired as long as the filter medium includes a cationic surfactant.

In the present embodiment, a binder resin is used for imparting stiffness and strength required for the filter medium for air filters, and is selected from cationic binder resins. The term "cationic" used herein means that the binder resin itself or the emulsifier or the like is cationic, and that the colloidal particles of the binder resin dispersed in water have a positive surface charge. Using a cationic binder resin, the surface of the glass fiber can be efficiently coated, so that both improvement in stiffness and strength and expression of water repellency can be achieved. If an anionic binder resin is used, the effect of efficiently coating the surface of the glass fiber cannot be obtained, and, under certain circumstances, the anionic binder resin is mixed with the cationic fluororesin and/or the cationic surfactant used in the present embodiment, therefore aggregation easily occurs, and thus the anionic binder resin is difficult to use. Examples of the binder resin include polyacrylic ester resins, a polystyrene butadiene resin, a polyvinyl acetate resin, and a polyurethane resin, and an aqueous dispersion including a binder resin described above is used. The binder resins described herein do not include the fluororesin used in the present embodiment because the effect of the fluororesin on imparting strength is small because of the repulsive force due to the fluorine atom as described above.

The filter medium preferably has solid mass contents, of the binder resin, the fluororesin and the surfactant in the filter medium, summed up to 2 to 12%, and more preferably 4 to 9% based on the whole filter medium. If the contents of these components are summed up to lower than 2%, the strength is not sufficiently exhibited, and if the contents are summed up to higher than 12%, the PF value is low.

The filter medium for air filters in the present embodiment is composed of a wet-laid nonwoven fabric including a glass fiber. The glass fiber has high stiffness, and therefore the filter medium can maintain sufficient voids required for air to pass inside, and a high PF value can be obtained. As the glass fiber, a glass wool fiber and a chopped glass fiber can be used. The glass wool fiber referred to herein is produced by elongation with a flame elongation method or rotary method and is an amorphous and discontinuous wool-like glass fiber with a fiber diameter having a certain distribution width. The fiber diameter is generally in a range of about 0.1 to about 10 $\mu$m, and has a certain distribution width, and therefore the value of the fiber diameter is generally expressed as an average fiber diameter, and the fiber diameter of the glass wool fiber used in the present embodiment is also the average fiber diameter. Meanwhile, the chopped glass fiber is a regular linear glass fiber obtained by cutting a continuous glass fiber spun from a spinneret having a predetermined diameter into pieces with a predetermined fiber length, and the fiber diameter is generally in a range of about 4 to about 30 $\mu$m, and the fiber length is generally in a range of about 1.5 to about 25 mm. In the filter medium of the present embodiment, the amorphous glass wool fiber having a small fiber diameter has an effect of increasing the collection efficiency and retaining voids in the filter medium. The linear chopped glass fiber having a large fiber diameter has an effect of imparting strength and stiffness required in processing and use of the filter unit, but the fibers are easily deposited in the horizontal direction during production of the filter medium, and therefore when the blending ratio of the chopped glass fiber is high, the density of the filter medium tends to be high. In the present embodiment, when the chopped glass fiber is used as the glass fiber, the blending ratio of the chopped glass fiber is preferably 1 to 50% by mass, more preferably 3 to 30% by mass, and still more preferably 5 to 10% by mass based on the total fiber mass of the fibers in the filter medium.

In the present embodiment, the average fiber diameter of the glass wool fiber is not particularly limited, but is preferably 0.1 to 10 $\mu$m, and more preferably 0.2 to 7 $\mu$m. In order to obtain a high PF value, at least some of the glass fibers are preferably a glass fiber having a fiber diameter of less than 1 $\mu$m.

In the present embodiment, a binder fiber can be used for the purpose of assisting the strength imparting effect of the binder resin. The binder fiber is a fiber that is added to a slurry including the glass fiber and imparts strength by melt adhesion, hydrogen bonding, physical entanglement, or the like, and is freely selected as long as an effect of the present embodiment is not impaired. Examples of the binder fiber include polyvinyl alcohol fibers, polyester fibers, and polyolefin fibers. A molten adhesive binder fiber, which is one of the above, is preferably used in the present embodiment. Examples of the form of the molten adhesive binder fiber include a side-by-side binder fiber in which a portion to be melted and a portion not to be melted are combined with the portions placed side by side, a core-sheath binder fiber having a core portion not to be melted and a sheath portion to be melted, and a fully fusible binder fiber to be entirely melted to contribute to adhesion between main fibers such as glass fibers. The blending ratio of the binder fiber is preferably up to 30% by mass, more preferably up to 20% by mass, and still more preferably up to 10% by mass based on the total fiber mass of the fibers in the filter medium. The molten adhesive binder fiber may have a form in which a filter medium for air filters includes any one, or two or three, of the side-by-side binder fiber, the core-sheath binder fiber, and the fully fusible binder fiber. Examples of the combination of two kinds of binder fibers include a combination of the side-by-side binder fiber and the core-sheath binder fiber, a combination of the side-by-side binder fiber and the fully fusible binder fiber, and a combination of the core-sheath binder fiber and the fully fusible binder fiber.

In the present embodiment, the filter medium may further include a binder fiber, and the filter medium may have solid mass contents, of the binder fiber, the binder resin, the fluororesin and the surfactant in the filter medium, summed up to 30% or less based on the whole filter medium. In the present embodiment, the filter medium includes the binder resin, and therefore the binder fiber is not essential, but may be included as an auxiliary agent in the filter medium. However, if the solid mass contents of the binder fiber, the binder resin, the fluororesin and the surfactant in the filter medium are summed up to more than 30%, the PF value may be decreased and the flame retardancy of the filter medium may deteriorate.

In the process of producing the filter medium for air filters according to the present embodiment, raw material fibers are dispersed in water to obtain a raw material slurry, and the raw material slurry is formed into a sheet in a wet state using a wet papermaking method. The water used for dispersion and papermaking is preferably acidic, and more preferably has a pH of 2 to 4. Dispersion and papermaking under acidity facilitates dispersion of glass fibers and increases the wet paper strength to facilitate the operation.

In the process of producing the filter medium according to the present embodiment, the sheet in the wet state obtained with the above processing is impregnated with an aqueous dispersion including a cationic binder resin, a fluororesin, and a cationic surfactant, and the sheet is dried to obtain a filter medium for air filters. An effect of the present invention can be enhanced by impregnating the sheet before drying with the binder resin, the fluororesin, and the surfactant. The sheet is preferably dried at a temperature of, for example, 100 to 170°C, and more preferably 120 to 160°C using a multi-cylinder dryer, a yankee dryer, or a hot air dryer in a paper machine, or using a rotary dryer, a circulation dryer, or the like in a hand-made paper machine.

In the present embodiment, an additive such as an antifoaming agent can be appropriately added to the aqueous dispersion including the binder resin, the fluororesin, and the surfactant within a range in which an effect of the present invention is not impaired.

Examples

Hereinafter, the present invention will be described with reference to specific Examples, but the present invention is not to limited to these descriptions. Note that the unit "part" in Examples indicates the solid content mass ratio of a fiber in a raw material slurry or the solid content mass ratio of a component in an impregnating solution, and the total amount of all fibers is 100 parts in the raw material slurry and the amount of the binder resin is 100 parts in the impregnating solution. As for an impregnating solution including no binder resin, the total amount of the impregnating solution is 100 parts. The unit "%" in Examples indicates the solid mass concentration of a component in an impregnating solution or the solid mass content of a component in a filter medium.

<Example 1>

With a table disintegrator, 60 parts of a glass wool having an average fiber diameter of 0.65 $\mu$m (B-06-F, manufactured by Unifrax Co.), 30 parts of a glass wool having an average fiber diameter of 2.44 $\mu$m (B-26-R, manufactured by Unifrax Co.), and 10 parts of a chopped glass fiber having an average fiber diameter of 6 $\mu$m and a cut length of 6 mm (EC-6-6-SP, manufactured by Unifrax Co.) were disintegrated using acidic water having a pH of 3.0 to obtain a raw material slurry. Next, wet paper was impregnated with an impregnating solution prepared by mixing 100 parts of a cationic binder resin (VONCOAT SFC-54, manufactured by DIC Corporation), 1.5 parts of a cationic fluororesin (AsahiGuard AG-E060, manufactured by AGC Inc.), 3.5 parts of a cationic surfactant (CATIOGEN TMP, manufactured by DKS Co. Ltd.), and water to set a solid content concentration to 1.8%, and the wet paper was dried using a rotary dryer at 130°C to obtain a filter medium for air filters having a basis weight of 70 g/m$^2$. The content of the impregnation components in the filter medium was 5.2%.

<Example 2>

A filter medium for air filters having a basis weight of 70 g/m$^2$ was obtained in the same manner as in Example 1 except that an impregnating solution was used that was prepared by mixing 100 parts of a cationic binder resin (VONCOAT SFC-54, manufactured by DIC Corporation), 2 parts of a cationic fluororesin (AsahiGuard AG-E060, manufactured by AGC Inc.), 3 parts of a cationic surfactant (CATIOGEN TMP, manufactured by DKS Co., Ltd.), and water to set a solid content concentration to 1.8%. The content of the impregnation components in the filter medium was 5.2%.

<Example 3>

A filter medium for air filters having a basis weight of 70 g/m$^2$ was obtained in the same manner as in Example 1 except that an impregnating solution was used that was prepared by mixing 100 parts of a cationic binder resin (VONCOAT SFC-54, manufactured by DIC Corporation), 3 parts of a cationic fluororesin (AsahiGuard AG-E060, manufactured by AGC Inc.), 2 parts of a cationic surfactant (CATIOGEN TMP, manufactured by DKS Co., Ltd.), and water to set a solid content concentration to 1.5%. The content of the impregnation components in the filter medium was 5.2%.

<Example 4>

A filter medium for air filters having a basis weight of 70 g/m$^2$ was obtained in the same manner as in Example 1 except that an impregnating solution was used that was prepared by mixing 100 parts of a cationic binder resin (VONCOAT SFC-54, manufactured by DIC Corporation), 4 parts of a cationic fluororesin (AsahiGuard AG-E060, manufactured by AGC Inc.), 1 part of a cationic surfactant (CATIOGEN TMP, manufactured by DKS Co., Ltd.), and water to set a solid content concentration to 1.2%. The content of the impregnation components in the filter medium was 5.2%.

<Example 5>

A filter medium for air filters having a basis weight of 70 g/m$^2$ was obtained in the same manner as in Example 1 except that an impregnating solution was used that was prepared by mixing 100 parts of a cationic binder resin (VONCOAT SFC-54, manufactured by DIC Corporation), 2 parts of a nonionic fluororesin (AsahiGuard AG-E550D, manufactured by AGC Inc.), 3 parts of a cationic surfactant (CATIOGEN TMP, manufactured by DKS Co., Ltd.), and water to set a solid content concentration to 1.8%. The content of the impregnation components in the filter medium was 4.0%.

<Example 6>

A filter medium for air filters having a basis weight of 70 g/m$^2$ was obtained in the same manner as in Example 1 except that 60 parts of a glass wool having an average fiber diameter of 0.65 $\mu$m (B-06-F, manufactured by Unifrax Co.), 12 parts of a glass wool having an average fiber diameter of 2.44 $\mu$m (B-26-R, manufactured by Unifrax Co.), 10 parts of a chopped glass fiber having an average fiber diameter of 6 $\mu$m and a cut length of 6 mm (EC-6-6-SP, manufactured by Unifrax Co.), and 18 parts of a core-sheath binder fiber having a cut length of 5 mm and a core/a sheath of polyester/polyester (MELTY 4080, manufactured by UNITIKA LTD.) were disintegrated with a table disintegrator using acidic water having a pH of 3.0. The content of the impregnation components in the filter medium was 5.1%.

<Example 7>

A filter medium for air filters having a basis weight of 70 g/m$^2$ was obtained in the same manner as in Example 1 except that an impregnating solution was used that was prepared by mixing 100 parts of a cationic binder resin (VONCOAT SFC-54, manufactured by DIC Corporation), 2 parts of a cationic fluororesin (AsahiGuard AG-E060, manufactured by AGC Inc.), 3 parts of a cationic surfactant (CATIOGEN TMP, manufactured by DKS Co., Ltd.), and water to set a solid content concentration to 4.8%. The content of the impregnation components in the filter medium was 11.8%.

<Comparative Example 1>

A filter medium for air filters having a basis weight of 70 g/m$^2$ was obtained in the same manner as in Example 1 except that an impregnating solution was used that was prepared by mixing a cationic binder resin (VONCOAT SFC-54, manufactured by DIC Corporation) and water to set a solid content concentration to 0.40%. The content of the impregnation components in the filter medium was 5.5%.

<Comparative Example 2>

A filter medium for air filters having a basis weight of 70 g/m$^2$ was obtained in the same manner as in Example 1 except that an impregnating solution was used that was prepared by mixing 100 parts of a cationic binder resin (VONCOAT SFC-54, manufactured by DIC Corporation), 5 parts of a cationic surfactant (CATIOGEN TMP, manufactured by DKS Co., Ltd.), and water to set a solid content concentration to 2.0%. The content of the impregnation components in the filter medium was 5.2%.

<Comparative Example 3>

A filter medium for air filters having a basis weight of 70 g/m$^2$ was obtained in the same manner as in Example 1 except that an impregnating solution was used that was prepared by mixing 100 parts of a cationic binder resin (VONCOAT SFC-54, manufactured by DIC Corporation), 1 part of a cationic fluororesin (AsahiGuard AG-E060, manufactured by AGC Inc.), 4 parts of a cationic surfactant (CATIOGEN TMP, manufactured by DKS Co., Ltd.), and water to set a solid content concentration to 2.0%. The content of the impregnation components in the filter medium was 5.2%.

<Comparative Example 4>

A filter medium for air filters having a basis weight of 70 g/m$^2$ was obtained in the same manner as in Example 1 except that an impregnating solution was used that was prepared by mixing 100 parts of a cationic binder resin (VONCOAT SFC-54, manufactured by DIC Corporation), 4.5 parts of a cationic fluororesin (AsahiGuard AG-E060, manufactured by AGC Inc.), 0.5 parts of a cationic surfactant (CATIOGEN TMP, manufactured by DKS Co., Ltd.), and water to set a solid content concentration to 1.1%. The content of the impregnation components in the filter medium was 5.2%.

<Comparative Example 5>

A filter medium for air filters having a basis weight of 70 g/m$^2$ was obtained in the same manner as in Example 1 except that an impregnating solution was used that was prepared by mixing 100 parts of a cationic binder resin (VONCOAT SFC-54, manufactured by DIC Corporation), 5 parts of a cationic fluororesin (AsahiGuard AG-E060, manufactured by AGC Inc.), and water to set a solid content concentration to 1.1%. The content of the impregnation components in the filter medium was 5.5%.

<Comparative Example 6>

A filter medium for air filters having a basis weight of 70 g/m$^2$ was obtained in the same manner as in Example 1 except that an impregnating solution was used that was prepared by mixing 60 parts of a cationic fluororesin (AsahiGuard AG-E060, manufactured by AGC Inc.), 40 parts of a cationic surfactant (CATIOGEN TMP, manufactured by DKS Co., Ltd.), and water to set a solid content concentration to 0.10%. The content of the impregnation components in the filter medium was 0.23%.

<Comparative Example 7>

A filter medium for air filters having a basis weight of 70 g/m$^2$ was obtained in the same manner as in Example 1 except that the step of impregnating was excluded.

<Comparative Example 8>

An aggregate was generated by mixing 100 parts of a cationic binder resin (VONCOAT SFC-54, manufactured by DIC Corporation), 3 parts of a cationic fluororesin (AsahiGuard AG-E060, manufactured by AGC Inc.), 2 parts of an anionic surfactant (HITENOL 330T, manufactured by DKS Co., Ltd.), and water to set a solid content concentration to 1.5%. Therefore, a filter medium for air filters was not prepared using this impregnating solution.

<Comparative Example 9>

An aggregate was generated by mixing 100 parts of an anionic binder resin (VONCOAT AN-1190S, manufactured by DIC Corporation), 3 parts of a cationic fluororesin (AsahiGuard AG-E060, manufactured by AGC Inc.), 2 parts of a cationic surfactant (CATIOGEN TMP, manufactured by DKS Co., Ltd.), and water to set a solid content concentration to 1.5%. Therefore, a filter medium for air filters was not prepared using this impregnating solution.

The filter mediums for air filters obtained in Examples and Comparative Examples were evaluated using the following method.

<Pressure Loss>

The pressure loss was measured, as a differential pressure under the condition that the filter medium for air filters having an effective area of 100 cm$^2$ was ventilated at a face velocity of 5.3 cm/sec, using a manometer (Manostar Gage WO81, manufactured by Yamamoto Electric Works Co., Ltd.).

<Permeability>

Under the condition that the filter medium for air filters having an effective area of 100 cm$^2$ was ventilated with air containing polydispersed polyalphaolefin (PAO) particles generated with a Laskin nozzle at a face velocity of 5.3 cm/sec, the number of the upstream PAO particles and the number of the downstream PAO particles were measured using a laser particle counter (KC-18, manufactured by RION Co., Ltd.), and the permeability was determined from the ratio between the upstream particle number and the downstream particle number. The target particle size was 0.10 to 0.15 $\mu$m.

<PF Value>

The PF value was calculated from the values of the pressure loss and the particle permeability using the formula shown in Mathematical Formula 1. The target particle size was 0.10 to 0.15 $\mu$m.

<Gurley Stiffness>

The gurley stiffness was measured using a gurley stiffness tester (manufactured by KUMAGAI RIKI KOGYO Co., Ltd.) under the condition of a test width of 1 inch and a test length of 2 inches.

<Tensile Strength>

The tensile strength was measured using Autograph AGX-S (manufactured by SHIMADZU CORPORATION) under the condition of a test width of 1 inch, a test length of 100 mm, and a tensile speed of 15 mm/min.

<Water Repellency>

The water repellency was measured in accordance with MIL-STD-282.

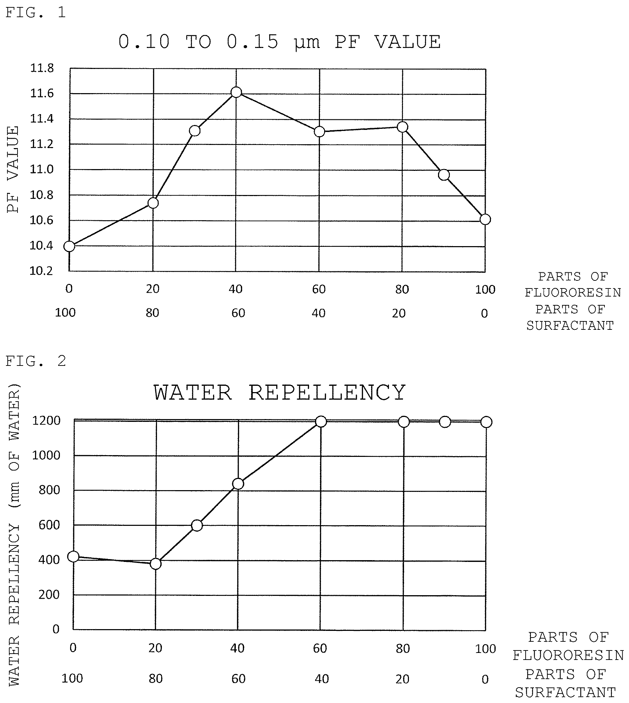

Tables 1 and 2 show the results of evaluating the filter mediums for air filters with the above methods. Figs 1 and 2 show a graph showing a relation between a solid content mass ratio of fluororesin/surfactant and a PF value of 0.10 to 0.15 $\mu$m, and a graph showing a relation between the solid content mass ratio and water repellency respectively using the results of Examples 1 to 4 and Comparative Examples 2 to 5.

[Table 1]

Table 1

| | | Example 1 | Example 2 | Example 3 | Example 4 | Example 5 | Example 6 | Example 7 |
|---|---|---|---|---|---|---|---|---|
| Binder resin | Parts | 100 | 100 | 100 | 100 | 100 | 100 | 100 |
| Binder resin ionicity | | Cation | Cation | Cation | Cation | Cation | Cation | Cation |
| Fluororesin/Surfactant | Parts/Parts | 1.5/3.5 | 2/3 | 3/2 | 4/1 | 2/3 | 2/3 | 2/3 |
| | Parts based on total of 100 | 30/70 | 40/60 | 60/40 | 80/20 | 40/60 | 40/60 | 40/60 |
| Fluororesin ionicity | | Cation | Cation | Cation | Cation | Nonion | Cation | Cation |
| Surfactant ionicity | | Cation | Cation | Cation | Cation | Cation | Cation | Cation |
| Blending ratio of chopped glass to all fibers | [%] | 10 | 10 | 10 | 10 | 10 | 10 | 10 |
| Blending ratio of molten adhesive binder fiber to all fibers | [%] | 0 | 0 | 0 | 0 | 0 | 18 | 0 |
| Content of impregnation components in filter medium | [%] | 5.2 | 5.2 | 5.2 | 5.2 | 4.0 | 5.1 | 11.8 |
| Pressure loss | [Pa] | 311 | 307 | 321 | 317 | 309 | 287 | 332 |
| 0.10 to 0.15 $\mu$m permeability | [%] | 0.0260 | 0.0232 | 0.0200 | 0.0216 | 0.0227 | 0.0584 | 0.0189 |
| 0.10 to 0.15 $\mu$m PF value | - | 11.31 | 11.61 | 11.30 | 11.34 | 11.57 | 11.05 | 11.00 |
| Gurley stiffness | [mN] | 7.38 | 7.41 | 8.18 | 7.95 | 7.83 | 10.6 | 9.02 |
| Tensile strength | [kN/m] | 0.69 | 0.65 | 0.66 | 0.67 | 0.65 | 0.92 | 0.82 |
| Water repellency | [mm of water] | 600 | 840 | 1200 or more | 1200 or more | 520 | 820 | 1110 |

[Table 2]

Table 2

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Binder resin | Parts | 100 | 100 | 100 | 100 | 100 | - | - | 100 | 100 |
| Binder resin ionicity | | Cation | Cation | Cation | Cation | Cation | - | - | Cation | Anion |
| Fluororesin/Surfactant | Parts/Parts | 0/0 | 0/5 | 1/4 | 4.5/0.5 | 5/0 | 60/40 | - | 2/3 | 2/3 |
| | Parts based on total of 100 | 0/0 | 0/100 | 20/80 | 90/10 | 100/0 | 60/40 | - | 40/60 | 40/60 |
| Fluororesin ionicity | | - | - | Cation | Cation | Cation | Cation | - | Cation | Cation |
| Surfactant ionicity | | - | Cation | Cation | Cation | - | Cation | - | Anion | Cation |
| Blending ratio of chopped glass to all fibers | [%] | 10 | 10 | 10 | 10 | 10 | 10 | 10 | - | - |
| Blending ratio of molten adhesive binder fiber to all fibers | [%] | 0 | 0 | 0 | 0 | 0 | 0 | 0 | - | - |
| Content of impregnation components in filter medium | [%] | 5.5 | 5.2 | 5.2 | 5.2 | 5.5 | 0.23 | 0 | - | - |
| Pressure loss | [Pa] | 327 | 343 | 323 | 317 | 316 | 255 | 287 | Preparation was impossible due to aggregation | Preparation was impossible due to aggregation |
| 0.10 to 0.15 $\mu$m permeability | [%] | 0.0453 | 0.0232 | 0.0292 | 0.0286 | 0.0380 | 0.0183 | 0.0623 | | |
| 0.10 to 0.15 $\mu$m PF value | - | 10.03 | 10.39 | 10.74 | 10.97 | 10.62 | 14.38 | 10.96 | | |
| Gurley stiffness | [mN] | 7.49 | 7.36 | 7.37 | 8.11 | 7.20 | 1.76 | 2.71 | | |
| Tensile strength | [kN/m] | 0.89 | 0.59 | 0.66 | 0.62 | 0.65 | 0.19 | 0.26 | | |
| Water repellency | [mm of water] | 660 | 420 | 380 | 1200 or more | 1200 or more | 630 | 0 | | |

From the results of Examples 1 to 4, in a case where a cationic binder resin was included and a cationic fluororesin and a cationic surfactant were included at a ratio in a range of 30/70 to 80/20, it was possible to obtain a filter medium having strength and stiffness that are practically sufficient and having a high PF value (of 11 or more) and high water repellency (of 508 mm of water or more). From the results of Example 5, in a case where a nonionic fluororesin was included, it was possible to obtain a filter medium having similar characteristics although the water repellency was slightly lower than that of Example 2. That is, it has been found that Example 2 in which a cationic fluororesin was used is more preferable. From the results of Example 6, in a case where a binder fiber was used, it was possible to obtain a filter medium having high strength and high stiffness although the PF value was slightly lower than that of Example 2. From the results of Example 7, in a case where the amount of the attached impregnation components was increased to about 12%, it was possible to obtain a filter medium having high strength, high stiffness, and high water repellency although the PF value was slightly lower than that of Example 2.

From the results of Comparative Example 1, in a case where no fluororesin and no surfactant were included, the PF value was low. From the results of Comparative Example 2, in a case where no fluororesin was included, the PF value and the water repellency were low. From the results of Comparative Example 3, in a case where the blending ratio of a fluororesin was low, the PF value and the water repellency were low. From the results of Comparative Example 4, in a case where the blending ratio of a surfactant was low, the PF value was low. From the results of Comparative Example 5, in a case where no surfactant was included, the PF value was low. From the results of Comparative Example 6, in a case where no binder resin was included, the stiffness and the strength were low. From the results of Comparative Example 7, in a case where no impregnation component was included, the stiffness and the strength were low, and no water repellency was obtained. From the results of Comparative Example 8, in a case where the surfactant was anionic, aggregation occurred due to compatibility between the chemicals, so that preparation of a filter medium was impossible. From the results of Comparative Example 9, in a case where the binder resin was anionic, aggregation occurred due to compatibility between the chemicals, so that preparation of a filter medium was impossible.

**Claims**

1. A filter medium, composed of a wet-laid nonwoven fabric including a glass fiber, for air filters, the filter medium comprising:

   a cationic binder resin;
   a fluororesin; and
   a cationic surfactant, wherein
   a solid content mass ratio of the fluororesin to the cationic surfactant is within a range of 30/70 to 80/20.

2. The filter medium for air filters according to claim 1, wherein the fluororesin is a nonionic or cationic fluororesin.

3. The filter medium for air filters according to claim 1 or 2, wherein the filter medium has solid mass contents, of the cationic binder resin, the fluororesin and the cationic surfactant, summed up to 2 to 12% based on the whole filter medium.

4. The filter medium for air filters according to any one of claims 1 to 3, wherein the wet-laid nonwoven fabric includes, as the glass fiber, a glass wool fiber having a fiber diameter of 1 to 10 $\mu$m, a glass wool fiber having a fiber diameter of less than 1 $\mu$m, and a chopped glass fiber having a fiber diameter of 4 to 30 $\mu$m.

5. The filter medium for air filters according to any one of claims 1 or 4, the filter medium further comprising a binder fiber, wherein the blending ratio of the binder fiber is up to 30% by mass based on the total fiber mass of the fibers in the filter medium.

6. A method for producing a filter medium for air filters, the method comprising the steps of:

   forming a slurry including a glass fiber into a sheet in a wet state using a wet papermaking method;
   impregnating the sheet in the wet state with an aqueous dispersion including a cationic binder resin, a fluororesin, and a cationic surfactant, the aqueous dispersion in which a solid content mass ratio of the fluororesin to the cationic surfactant is within a range of 30/70 to 80/20; and
   drying the sheet in the wet state impregnated with the aqueous dispersion to obtain a dry sheet.

**Patentansprüche**

1. Filtermedium für Luftfilter, das aus einem Nassvliesstoff zusammengesetzt ist, der Glasfasern umfasst, wobei das Filtermedium umfasst:

   ein kationisches Bindemittelharz;
   ein Fluorharz; und
   ein kationisches grenzflächenaktives Mittel, wobei
   ein Feststoffgehalt-Massenverhältnis des Fluorharzes zu dem kationischen grenzflächenaktiven Mittel innerhalb eines Bereichs von 30/70 bis 80/20 liegt.

2. Filtermedium für Luftfilter nach Anspruch 1, wobei das Fluorharz ein nicht-ionisches oder kationisches Fluorharz ist.

3. Filtermedium für Luftfilter nach Anspruch 1 oder 2, wobei das Filtermedium aufsummierte Feststoffmassengehalte des kationischen Bindemittelharzes, des Fluorharzes und des kationischen grenzflächenaktiven Mittels von 2 bis 12 % auf der Basis des gesamten Filtermediums aufweist.

4. Filtermedium für Luftfilter nach einem der Ansprüche 1 bis 3, wobei der Nassvliesstoff als die Glasfasern Glaswollefasern mit einem Faserdurchmesser von 1 bis 10 µm, Glaswollefasern mit einem Faserdurchmesser von weniger als 1 µm und geschnittene Glasfasern mit einem Faserdurchmesser von 4 bis 30 µm umfasst.

5. Filtermedium für Luftfilter nach einem der Ansprüche 1 oder 4, wobei das Filtermedium ferner Bindemittelfasern umfasst, wobei der Mischungsanteil der Bindemittelfasern bis zu 30 Massen-% auf der Basis der gesamten Fasermasse der Fasern in dem Filtermedium beträgt.

6. Verfahren zur Herstellung eines Filtermediums für Luftfilter, wobei das Verfahren die Schritte umfasst:

   Ausbilden einer Aufschlämmung, die Glasfasern umfasst, zu einer Lage in einem nassen Zustand unter Verwendung eines Nass-Papierherstellungsverfahrens;
   Tränken der Lage in dem nassen Zustand mit einer wässrigen Dispersion, die ein kationisches Bindemittelharz, ein Fluorharz und ein kationisches grenzflächenaktives Mittel umfasst, wobei in der wässrigen Dispersion ein Feststoffgehalt-Massenverhältnis des Fluorharzes zu dem kationischen grenzflächenaktiven Mittel innerhalb eines Bereichs von 30/70 bis 80/20 liegt; und
   Trocknen der Lage in dem mit der wässrigen Dispersion getränkten nassen Zustand, so dass eine trockene Lage erhalten wird.

**Revendications**

1. Milieu filtrant, composé d'un tissu non-tissé déposé par voie humide comprenant une fibre de verre, pour filtres à air, le milieu filtrant comprenant :

   une résine liante cationique ;
   une fluororésine ; et
   un tensioactif cationique, dans lequel
   un rapport massique de la teneur en solides de la fluororésine sur le tensioactif cationique est dans une plage de 30/70 à 80/20.

2. Milieu filtrant pour filtres à air selon la revendication 1, dans lequel la fluororésine est une fluororésine non ionique ou cationique.

3. Milieu filtrant pour filtres à air selon la revendication 1 ou 2, dans lequel le milieu filtrant a des teneurs en masse de solides, de la résine liante cationique, de la fluororésine et du tensioactif cationique, totalisées jusqu'à 2 à 12 % par rapport au milieu filtrant global.

4. Milieu filtrant pour filtres à air selon l'une quelconque des revendications 1 à 3, dans lequel le tissu non-tissé déposé par voie humide comprend, comme fibre de verre, une fibre de laine de verre ayant un diamètre de fibre de 1 à 10 µm, une fibre de laine de verre ayant un diamètre de fibre inférieur à 1 µm, et une fibre de verre hachée ayant un diamètre de fibre de 4 à 30 μm.

5. Milieu filtrant pour filtres à air selon l'une quelconque des revendications 1 ou 4, le milieu filtrant comprenant en outre une fibre liante, dans lequel le rapport de mélange de la fibre liante est jusqu'à 30 % en masse sur la base de la masse totale de fibres des fibres dans le milieu filtrant.

6. Procédé pour la production d'un milieu filtrant pour filtres à air, le procédé comprenant les étapes de :

mise en forme d'une suspension comprenant une fibre de verre en une feuille dans un état humide au moyen d'un procédé de fabrication de papier humide ;
imprégnation de la feuille dans un état humide avec une dispersion aqueuse comprenant une résine liante cationique, une fluororésine et un tensioactif cationique, la dispersion aqueuse dans laquelle un rapport massique de la teneur en solides de la fluororésine sur le tensioactif cationique est dans une plage de 30/70 à 80/20 ; et
séchage de la feuille dans un état humide imprégnée avec la dispersion aqueuse pour obtenir une feuille sèche.

FIG. 1

## 0.10 TO 0.15 μm PF VALUE

FIG. 2

## WATER REPELLENCY

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010094580 A
- JP 2014221456 A
- JP 2017042762 A
- JP 2018038983 A